# EUROPÄISCHE PATENTSCHRIFT

(11) **EP 1 703 969 B1**
(45) Veröffentlichungstag und Bekanntmachung des Hinweises auf die Patenterteilung: **20.08.2008**
(21) Anmeldenummer: 05700839.3
(22) Anmeldetag: 12.01.2005
(51) Int. Cl.: B01J 19/00, F28D 7/10, B01F 13/00, B01F 5/04, B01F 15/06

(54) **VERFAHREN UND VORRICHTUNG ZUM MISCHEN WENIGSTENS ZWEIER FLUIDE IN EINEM MIKROMISCHREAKTOR**
METHOD AND DEVICE FOR MIXING AT LEAST TWO FLUIDS IN A MICROMIXINGREACTOR
PROCEDE ET DISPOSITIF POUR MELANGER AU MOINS DEUX FLUIDES DANS UN MICROREACTEUR DE MELANGE

(30) Priorität: 13.01.2004 DE 102004001852
(43) Veröffentlichungstag der Anmeldung: 27.09.2006
(73) Patentinhaber: Syntics GmbH, 44799 Bochum (DE)
(72) Erfinder: DAHLBECK, Rolf, 44799 Bochum (DE); DIERSELHUIS, Marcel, Syntics GmbH, 44799 Bochum (DE)
(74) Vertreter: Klingseisen, Franz
(86) Internationale Anmeldenummer: PCT/EP2005/000212
(87) Internationale Veröffentlichungsnummer: WO 2005/068064

(56) Entgegenhaltungen:
- DE-A1- 3 926 466
- DE-A1- 10 123 092
- DE-A1- 19 927 556
- US-A- 5 887 977

## Beschreibung

Die Erfindung betrifft ein Verfahren und eine Vorrichtung zum Mischen von wenigstens zwei Fluiden in einem Mikromischreaktor nach dem Oberbegriff der Ansprüche 1 und 3.

Ein Mikromischer dieser Art ist aus DE 199 27 556 A1 bekannt, wobei zwei oder mehr Fluide in einen quer zu den Ebenen des Folienstapels verlaufenden Hauptkanal radial eingeleitet werden. Hierbei werden Fluidlamellen entsprechend der Foliendicke übereinander geschichtet, wobei die Fluide durch Diffusion sich vermischen.

Aus DE 101 23 092 A1 ist ein statischer Mischer zum Mischen mindestens zweier Fluide bekannt, bei dem benachbarte Fluidlamellen in eine trichterförmige Einlasskammer zum Mischen eingeleitet werden, wobei mehrere solcher Einlasskammem jeweils über einen Zuführkanal mit einer zentralen Wirbelkammer verbunden sind, in die die Zuführkanäle tangential einmünden, um in der Wirbelkammer eine Fluidspirale zu erzeugen.

Aus US-A-5 887 977 ist eine Mischvorrichtung bekannt, bei der senkrecht zu einem Plattenstapel eine als Mischkammer dienende Bohrung verläuft, in die tangential Nuten in den Ebenen der Platten einmünden, um in der Mischkammer eine Wirbelströmung zu erzeugen.

Weiterhin ist ein Mikromischreaktor aus DE 101 23 092 A1 bekannt, wobei in den Folienebenen Fluidlamellen für die zu mischenden Fluide ausgebildet sind, die zu einem Gesamtfluidstrom in der Folienebene zusammengeführt und als Fluidstrahl in eine Wirbelkammer unter Ausbildung einer nach innen strömenden Fluidspirale eingeleitet werden, wobei sich die Wirbelkammer quer zu dem Folienstapel erstreckt und das Ableiten der gebildeten Mischung aus dem Zentrum der Fluidspirale am Ende der Wirbelkammer erfolgt.

Der Erfindung liegt die Aufgabe zugrunde, ein Verfahren und eine Vorrichtung der eingangs angegebenen Art so auszubilden, dass die Mischung der Fluide in Abhängigkeit von der Art der zu mischenden Fluide optimal erfolgen kann.

Dies wird erfindungsgemäß durch die Merkmale im kennzeichnenden Teil der Ansprüche 1 und 3 erreicht. Die zu mischenden Fluide werden getrennt und benachbart auf den Folienebenen quer zur Längsachse der Mischkammer so eingeleitet dass die Mischung der Fluide im Wesentlichen unmittelbar bei deren Eintritt in die Mischkammer bzw. im Mündungsbereich erfolgt und die sich bildende Mischung durch eine Temperiereinrichtung temperiert wird, d. h. in Abhängigkeit von den zu mischenden Fluiden gekühlt oder beheizt wird.

Durch die Temperiereinrichtung kann eine möglichst exakte, isotherme Temperaturührung beim Mischen der Fluide erreicht werden, wenn eine exotherme oder endotherme Reaktion zwischen den zu mischenden Fluiden stattfindet.

Der Begriff Mischen ist erfindungsgemäß weit zu verstehen und er umfasst auch die Herstellung von Emulsionen und Dispersionen. Als Fluide sind verschiedenste Gase und fließfähige Medien zu verstehen.

Bei einem bevorzugten Ausführungsbeispiel umfasst das Verfahren mindestens drei Verfahrensschritte: Das Einleiten von mindestens zwei Fluiden als zwei oder mehr Teilströme in eine oder mehrere Misch-/Reaktionskammern, wobei die Teilströme von mindestens zwei Seiten in nebeneinander und/oder übereinander liegenden Fluidteilströmen so eingeleitet werden, dass sie auf einen bevorzugt zentral in der Mitte der Misch-/Reaktionskammer befindlichen Temperierzylinder auftreffen und zumindest partiell um ihn herum fließen. Gleichzeitig zur einsetzenden Mischreaktion erfolgt in einem zweiten Verfahrensschritt die Kontrolle der Mischreaktion durch den erwähnten Temperierzylinder und/oder außen an der Misch-/Reaktionskammer befindliche Temperiereinrichtungen derart, dass optimal eine isotherme Mischreaktion stattfindet. In einem dritten Verfahrensschritt wird die Mischung kontinuierlich aus einer ringförmigen Öffnung im Boden oder im Deckel der Misch-/Reaktionskammer abgeführt.

Der zentrale Temperierzylinder bewirkt eine Aufspaltung der einzelnen Fluidströme in zwei in etwa gleich große Teilfluidströme, die sich in Uhrzeigerrichtung und entgegen der Uhrzeigerrichtung um den Temperierzylinder herum bewegen, um gegebenenfalls auf die entgegen gerichteten Teilfluidströme anderer Edukte zu treffen. In einer alternativen Prozessführung werden die Teilfluidströme mit einer Vorzugsdrehrichtung in die Misch-/Reaktionskammer eingeführt. Der innige Kontakt mit dem zentralen Temperierzylinder begünstigt die isotherme Prozessführung.

Die Teilströme der Fluide werden in der Weise in die Misch-/Reaktionskammer eingeführt, dass sich zwei benachbarte Teilströme unterschiedlicher Fluide bevorzugt umgehend kreuzen.

Zur Bestimmung der Temperatur wird in vorteilhafter Weise ein Temperaturfühler in oder in der Nähe der Misch-/Reaktionskammer integriert, bevorzugt in oder an der Auslassöffnung für die Mischung. Die Temperaturmessung erfolgt bevorzugt über Thermoelemente, Widerstandthermometer, Thermistoron oder durch Strahlungsmessung.

Die Temperierung erfolgt vorteilhaft durch ein Fluid, das die in einer exothermen Mischungsreaktion entstehende Wärme umgehend abführt bzw, für eine endotherme Mischungsreaktion notwendige Wärme zuführt. Besonders vorteilhaft kann die für eine endotherme Mischungsreaktion erforderliche Wärme auch elektrisch der Temperiereinheit, z. B. einer Widerstandsheizung, zugeführt werden.

Bei einer endothermen Mischungsreaktion werden die Fluide vorteilhaft bereits mit der notwendigen Temperatur den Misch-/Reaktionskammern zugeleitet, so dass die Temperiereinrichtungen nur noch die bei der endothermen Mischungsreaktion umgewandelte Wärme wieder zuführen müssen, so dass über die gesamte Ausdehnung der Misch-/Reaktionskammern die Fluide die gleiche Temperatur besitzen. Dies erfolgt vorteilhaft durch Heizeinrichtungen, die sich zwischen je zwei Folien mit Zuführkanälen für die Fluidteilströme befinden.

Die sich in den Misch-/Reaktionskammem befindlichen Mikrostrukturen bewirken eine schnellere Vermischung der Teilströme der Fluide, so dass durch die Verwirbelung eine diffusive Mischung begünstigt wird und in den meisten Anwendungen ein einmaliges Durchlaufen der beschriebenen drei Verfahrensschritte ausreichend ist.

Vorteilhaft kann durch ein Hintereinanderschalten der Misch-/Reaktionskammern das Mischungsergebnis verbessert werden.

Durch die sich in der Misch-/Reaktionskammer befindlichen Mikrostrukturen und der damit verbundenen schnelleren Durchmischung der Fluidteilströme kann die Misch-/Reaktionskammer in der Länge kurz ausgelegt werden, bevorzugt zwischen 1 mm und 20 mm. Dies begünstigt in vorteilhafter Weise eine kompakte Bauform und die Integration des Verfahrens in klein dimensionierte Anlagen, bevorzugt in Mikroreaktionssysteme, wie sie aus DE 103 35 038, DE 199 17 330 A1 und DE 202 01 753 U1 bekannt sind.

In einer weiteren Ausführungsform wird ein Fluid, bevorzugt ein einen die Mischung stabilisierenden Hilfsstoff aufweisendes Fluid oder ein einen Katalysator tragendes Fluid, durch eine Öffnung gegenüber liegend zum Auslass der Mischung in die Misch-/Reaktionskammern eingeführt, wobei die Öffnung dem Auslass in Achsrichtung der Vorrichtung gegenüberliegt. Dadurch bekommt der Hilfsstoff bzw. der Katalysator eine besonders lange Verweilzeit in den Misch-/Reaktions-kammern. Alternativ kann der Hilfsstoff bzw. der Katalysator auch bereits einem oder mehreren Fluiden beigemischt sein. Insbesondere kann das Hilfsfluid bzw. der Katalysator in Teilströmen auch den einzelnen Fluiden zugemischt sein, die auf jeder Ebene der die Zuführkanäle tragenden einzelnen Platten oder Folien in die Mischkammer eingeführt werden.

In einer vorteilhaften Ausführungsform wird durch die den Auslässen der Misch-/Reaktionskammern gegenüber liegenden Öffnungen ein treibendes Fluid (z. B. ein inertes Gas oder eine Flüssigkeit) eingeführt, wodurch die Verweilzeit des Mischungsmediums in den Misch-/Reaktionskammern wesentlich verkürzt werden kann. Dies ist insbesondere bei extrem schnellen Mischungsreaktionen von Vorteil.

In einer vorteilhaften Ausführungsform befinden sich in den Misch-/Reaktionskammern Mikrostrukturen, an denen sich die Fluidteilströme brechen, beugen und umlenken, wodurch eine zusätzliche intensive Verwirbelung der Fluidteilströme erfolgt.

In einer weiteren vorteilhaften Ausführungsform werden die Innenwände der Misch-/Reaktionskammern sowie die sich in den Misch-/Reaktionskammern befindlichen Mikrostrukturen mit einem Katalysator beschichtet bzw. können die Mikrostrukturen und/oder die Folien bzw. Platten aus einem katalytisch wirkenden Material hergestellt sein.

Bevorzugt werden Teilströme nicht unmittelbar über der Auslassöffnung in die Misch-/Reaktionskammern eingeleitet, sondern in einem Abstand darüber, damit die Teilströme, die auf der untersten Ebene eingeleitet werden, noch eine ausreichende Mischstrecke bis zum Auslass durchströmen müssen.

Bei einer bevorzugten Vorrichtung zum Mischen von mindestens zwei Fluiden werden die Fluide getrennt von mindestens zwei Seiten in nebeneinander und/oder übereinander liegenden Fluidteilströmen den Misch-/Reaktionskammem zugeführt, die zentral in der Mitte der Misch-/Reaktionskammer einen Temperierzylinder aufweisen. Die Mischung wird am Boden oder am Deckel der Misch-/Reaktionskammern kontinuierlich abgeführt.

Vorteilhaft wird die Temperatur der Mischreaktionen durch die erwähnten Temperierzylinder und/oder durch die sich außen an den Misch-/Reaktionskammern befindlichen Temperiereinrichtungen geregelt.

In einer weiteren besonders vorteilhaften Ausführungsform werden die Fluidteilströme so in die Misch-/Reaktionskammern zugeführt, dass sich benachbarte Fluidteilströme unterschiedlicher Edukte möglichst unmittelbar nach ihrem Eintritt in die Misch-/Reaktionskammern gegenseitig durchkreuzen. Dies wird bevorzugt realisiert, indem die Höhe der Zuführkanäle und gleichzeitig deren Breite derart ausgebildet wird, dass die Fluidteilströme eine bevorzugte Strömungsrichtung in die Misch-/Reaktionskammern hinein erhalten.

Es ist auch möglich, die Teilfluidströme zumindest teilweise zu vermischen, bevor sie in die Misch-/Reaktionskammer einströmen. Beispielsweise kann dies dadurch erfolgen, dass sich die Zuführkanäle unmittelbar vor der Mündungsöffnung überlappen bzw. ineinander münden, sodass die Teilströme in den beiden Zuführkanälen unmittelbar vor Austritt in die Mischkammer miteinander in Kontakt kommen und sich durchmischen können.

Es können die sich in den Misch-/Reaktionskammern befindlichen Mikrostrukturen sowohl starr eingebaut sein, indem sie vorteilhaft gemeinsam mit den die Zuführkanäle tragenden Platten oder Folien hergestellt werden bzw. an diesen angeformt sind, und/oder als eigenständig hergestellte Bauteile beweglich in die Misch-/Reaktionskammern eingefügt werden.

Die Misch-/Reaktionskammer weist bei einem ringförmigen Querschnitt einen Durchmesser von unter 2 mm mit bevorzugt elliptischem Querschnitt auf. Die Fluidteilströme werden vorteilhaft im oberen Teil der zylindrischen Mischkammer zugeleitet, falls sich die Abflussöffnung im Boden befindet und umgekehrt. Aufgrund der geringen Höhe bzw. Länge der Misch-/Reaktionskammer, die bevorzugt zwischen 5mm und 20 mm lang ist, sind die Druckverluste in der Misch-/Reaktionskammer gegenüber den Druckverlusten in den Zuführungen als gering anzusehen. Vorteilhaft ist der Boden oder der Deckel, je nachdem, wo die Mischung abgeführt werden soll, durch eine Ringöffnung fast vollständig offen gestaltet. Dadurch werden Staubereiche der Strömung um die Abflussöffnung herum vermieden.

Vorteilhaft ist die Wandstärke zwischen den innen liegenden Temperierkanälen und den Misch-/Reaktionskammern als auch zwischen den Misch-/Reaktionskammern und den außen liegenden Temperierkanälen bevorzugt zwischen 50 µm und 1 mm dick, besonders bevorzugt zwischen 100 µm und 500 µm dick.

Vorteilhaft werden die Fluide als Fluidteilströme in Zuführkanälen den Misch-/Reaktionskammern zugeleitet, wobei die Zuführkanäle im Bereich der Mündungsöffnung bevorzugt eine Breite zwischen 30 µm und 250 µm und eine Höhe zwischen 20 µm und 250 µm aufweisen. Die Zuführkanäle befinden sich vorteilhaft in Platten oder Folien mit Dicken bevorzugt zwischen 50 µm und 500 µm, die übereinander gestapelt werden. Bevorzugt werden die Teilströme alternierend neben- und/oder übereinander geführt, so dass immer Teilströme anderer Fluide sich neben- und/oder übereinander befinden und gleichzeitig immer Teilströme unterschiedlicher Fluide auf der gleichen Ebene gegenüberliegend in die Misch-/Reaktionskammern eingeführt werden.

Der Mikromischreaktor besitzt eine Fluidverteilungsebene, über die die Fluide variabel entsprechend der gewünschten Durchflussmenge auf eine oder mehrere Misch-/Reaktionskammern aufgeteilt werden. Zudem kann der Mikromischreaktor vorteilhaft über Zuführkanäle und über die Anzahl der die Zuführkanäle tragenden Platten oder Folien an die Durchflussmenge angepasst werden.

Die Fluidverteilerebene weist zur Messung der Temperatur der Mischung einen Temperaturfühler auf, der bevorzugt im oder am Auslasskanal der Mischung angebracht ist. Besonders bevorzugt kann die Temperaturmessung in den Misch-/Reaktionskammern bzw. in den oder an den Auslässen der Misch-/Reaktionskammern integriert werden.

Die Vorrichtung weist eine Ebene auf, in der durch entsprechende Strukturen die Möglichkeit geschaffen wird, ein Heiz- oder Kühlmedium wieder zurück zu führen, so dass die Misch-/Reaktionskammern durch das gleiche Kühl- bzw. Heizmedium sowohl von innen als auch von außen temperiert werden können.

Vorzugsweise werden die Misch-/Reaktionskammern in Reihe oder in einer alternativen Ausführungsform in Reihen und Spalten auf den einzelnen Folien angeordnet. Die kompakte Bauweise begünstigt dabei vorteilhaft die Integration der Vorrichtung in andere Systeme, bevorzugt in Mikroreaktionssysteme, besonders bevorzugt in modulare Mikroreaktionssysteme.

Die Vorrichtung weist in einer alternativen Ausführungsform Verbindungen zwischen mehreren Misch-/Reaktionskammern auf. Dadurch wird die vorteilhafte Möglichkeit geschaffen, dass die Mischung durch ein nacheinander erfolgendes Durchlaufen mehrerer Misch-/Reaktionskammern verbessert wird

Vorteilhaft bestehen die Platten oder Folien, aus denen der Mikromischreaktor zusammen gefügt wird, aus hinreichend inertem Material, bevorzugt Metalle, Halbleiter, Legierungen, Edelstähle, Verbundmaterialien, Glas, Quarzglas, Keramik oder Polymermaterialien oder aus Kombinationen dieser Materialien.

Als geeignete Verfahren zum fluidisch dichten Verbinden der genannten Platten oder Folien kommen z. B. Verpressen, Nieten, Kleben, Löten, Schweißen, Diffusionslöten, Diffusionsschweißen, anodisches oder eutektisches Bonden in Frage.

Die Strukturierung der Platten und Folien kann z. B. erfolgen durch Fräsen, Laserablation, Ätzen, dem LIGA-Verfahren, galvanisches Abformen, Sintern, Stanzen und Verformen.

Das Verfahren und die Vorrichtung werden vorteilhaft zur Mischung von mindestens zwei Stoffen verwendet, wobei beide Stoffe in einem eingeleiteten Fluid oder ein erster Stoff in einem ersten Fluid und ein zweiter Stoff oder weitere Stoffe in einem oder mehreren weiteren eingeleiteten Fluiden enthalten sind. Besonders vorteilhaft werden das Verfahren und die Vorrichtung verwendet für exotherme oder endotherme Mischreaktionen, alternativ für Mischungen unter Hinzufügung von einem die Mischung stabilisierenden Hilfsstoff oder einem die Mischreaktion unterstützenden Katalysator.

Anhand der Zeichnungen wird die Erfindung nachstehend beispielsweise näher erläutert. Die Erfindung beinhaltet, dass unterschiedlich viele, mindestens eine, Misch-/Reaktionskammern in einer Reihe angeordnet sind. Aus Gründen der Übersichtlichkeit sind jedoch nur die Strukturen für eine Misch-/Reahrtionskammer wiedergegeben. Diese Strukturen wiederholen sich auf jeder Ebene periodisch entsprechend der Anzahl der Misch-/Reaktionskammern. Obwohl die Erfindung auch die Zuführung und das gleichzeitige Mischen von mehr als zwei Edukten ermöglicht, wird aus Gründen der Übersichtlichkeit die Erfindung nur am Beispiel von zwei Edukten erläutert.

### Es zeigen:

- Fig. 1: eine Querschnittsansicht des Mikroreaktionsmischers in einem Gehäuse,
- Fig. 2a: Darstellung einer Mischfolie für die Ebene 8a,
- Fig. 2b: Detailansicht einer Mischfolie, darstellend die Ebene 8a,
- Fig. 3a: Darstellung einer Mischfolie für die Ebene 8b,
- Fig. 3b: Detailansicht einer Mischfolie, darstellend die Ebene 8b,
- Fig. 4a: Aufbau des Folienstapels im Querschnitt über die Ebene 6 bis Ebene 9,
- Fig. 4b: Draufsicht auf eine Ebene mit Mischkammer in Fig. 4a,
- Fig. 5a bis Fig. 5d: schematisch eine Explosionsdarstellung des Schichtaufbaues mit Ebene 0 bis Ebene 12,
- Fig. 6: eine Mikrostrukturierung als Ebene 8c für die alternative Ausführungsform mit Zuführung eines Katalysators oder eines Fluids, das einen eine Mischung stabilisierenden Hilfsstoff trägt,
- Fig. 7: eine perspektivische Ansicht einer Mischkammer mit Zuführkanälen unter Weglassung der Folienstrukturen zur Verdeutlichung der Fluidströme,
- Fig. 8: eine schematische Ansicht des Aufbaus eines Mischbereichs,
- Fig. 9: eine Draufsicht auf ein Trennelement,
- Fig. 10: eine Schnittansicht längs der Linie I-I in Fig. 9, und
- Fig. 11: eine Ansicht einer anderen Ausführungsform einer Mischkammer.

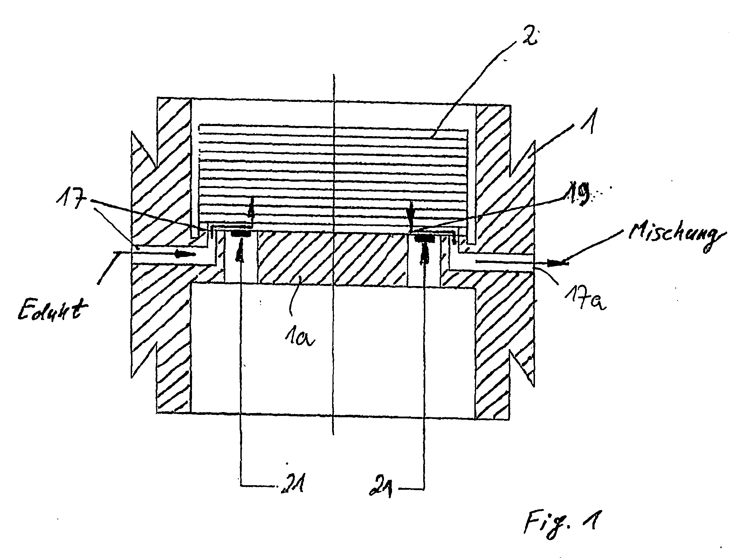

Fig. 1 zeigt als Ausführungsbeispiel einen Stapel 2 aus unterschiedlich strukturierter Platten oder Folien, die durchaus eine unterschiedliche Dicke haben können. Dieser Folienstapel 2 ist in ein Gehäuse 1 eingesetzt, wobei der Stapel 2 auf einem Gehäuseteil 1a aufliegt. Durch seitliche Bohrungen 17 werden die zu mischenden Edukte A und B zugeführt. Auf einer dritten Seite wird die Mischung der zugeführten Edukte A und B über eine oder mehrere Bohrungen 17a abgeführt.

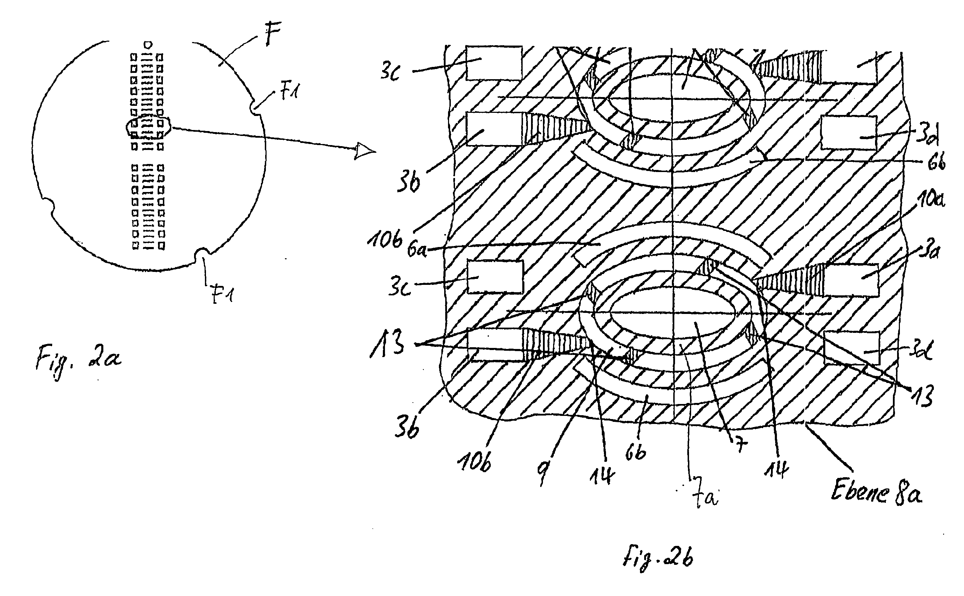

Fig. 2a zeigt in einer Draufsicht eine Platte oder Folie F, auf der in einer Reihe mehrere der in Fig. 2b wiedergegebenen Mikrostrukturen mit ringförmiger Mischkammer ausgebildet sind. Auf dem Umfang der scheibenförmigen Folie F sind Ausnehmungen F1 zur Positionierung der Folie im Gehäuse 1 vorgesehen.

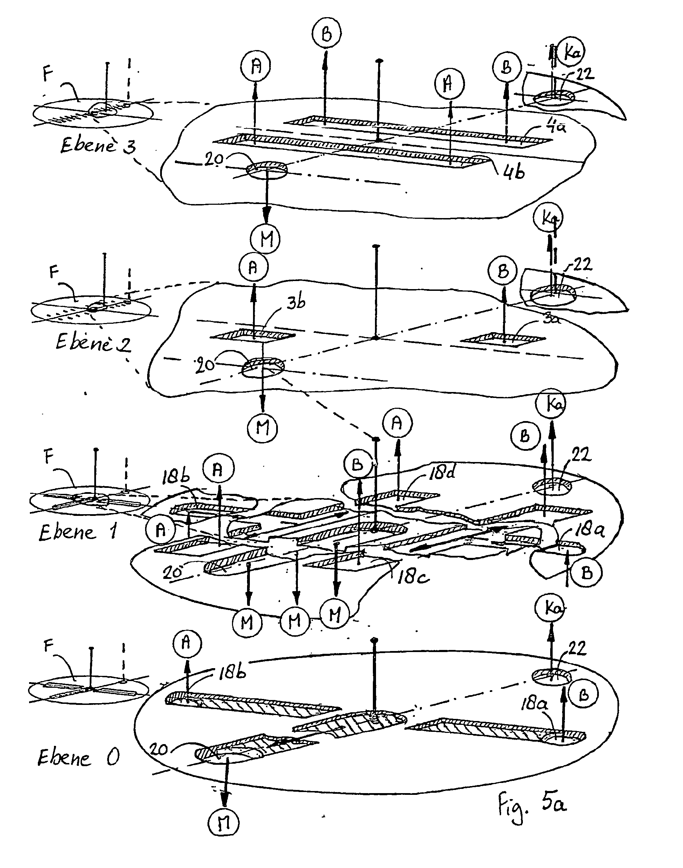

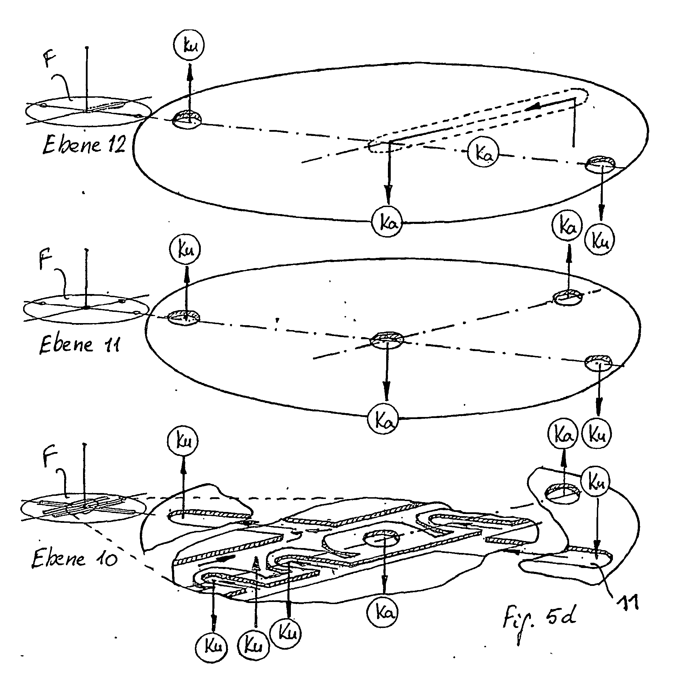

Die Edukte A und B gelangen über die Bohrungen 17 in entsprechende Durchführungsbohrungen in einer Ebene 0 einer Folie F in Fig. 5a und von dieser auf eine Fluidverteilerplatte (Ebene 1). Die Zuführkanäle 18a und 18b, die gebildet sind aus z. B. durch Ätzen erzeugte Mikrostrukturen, bringen die Edukte in die Verteilerarme 18c und 18d. Durch die Länge der Verteilerarme 18c und 18d wird bestimmt, wie viele Misch-/Reaktionskammern 9 für die Mischung genutzt werden. Auf diese Weise wird eine Möglichkeit geschaffen, die Misch-/Reaktionskapazität auf einfache Weise an die Durchflussmengen der Fluide anzupassen.

Eine nächste Folie (Ebene 2) weist zwei Durchbrüche 3a und 3b auf. Durch diese Durchbrüche 3a und 3b gelangen die Edukte A und B in die Verteilkanäle 4a und 4b der darüber liegenden Ebene 3. Durch diese Strukturierung wird eine erste Aufteilung der Fluidströme erreicht, so dass diese auf den Ebenen 8a und 8b sowohl über- und nebeneinander liegend als auch gegenüber liegend in die Misch-/Reaktionskammern 9 eingeleitet werden können.

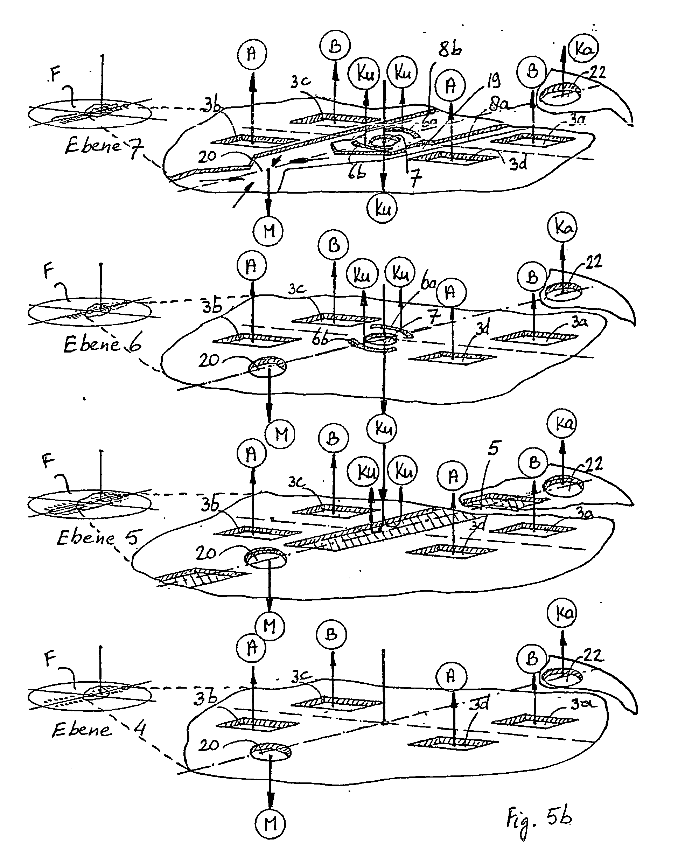

Die Edukte A und B fließen über Durchbrüche 3a und 3c (z. B. Edukt A) sowie Durchbrüche 3b und 3d in den Ebenen 4 bis 7 (Fig. 5b) bis zu den Ebenen 8a und 8b, auf denen die eigentliche Mischung stattfindet. Ringförmige Misch-/Reaktionskammem 9 werden gebildet durch ein alternierendes Aufeinanderschichten der Folien mit Ebene 8a und Ebene 8b. Auf den Ebenen 8a schließen sich an die Durchbrüche 3a und 3b horizontale Zuführkanäle 10a und 10b an, die die Edukte A bzw. B zu den Misch-/Reaktionskammem 9 leiten. Die Durchbrüche 3c und 3d dienen nur dem Weiterleiten der Edukte A und B auf die nächste Ebene 8b. Die Zuführkanäle 10a und 10b sind derart mikrostrukturiert, dass sie sich zu den Einmündungen 14 hin horizontal verengen. Weiter kann vorgesehen werden, die Einmündungen 14 nicht nur horizontal zu verengen, sondern gleichzeitig die Tiefe zu verringern. Damit wird ein gerichtetes Einströmen der Fluidteilströme leicht nach oben in die Kammer 9 erreicht.

Die Durchbrüche 3c und 3d auf der Ebene 8b sind mit den Zuführkanälen 10a' und 10b' verbunden. Die Folien der Ebene 8b werden in vorteilhafter Weise mit der mikrostrukturierten Seite nach unten gestapelt, so dass die Edukte B bzw. A auf etwa gleicher Höhe in die Misch-/Reaktionskammern 9 geleitet werden. Die Zuführkanäle 10a' und 10b' leiten aufgrund der Stapelung der Folie mit der Mikrostrukturierung nach unten die Edukte A und B an den Einmündungen 14' nunmehr leicht nach unten gerichtet in die Misch-/Reaktionskammern 9 ein. Dadurch wird auf einfache Weise erreicht, dass sich Fluidteilströme der Edukte A und B praktisch unmittelbar nach ihrem Einfließen in die Misch-/Reaktionskammern 9 gegenseitig kreuzen, durchdringen und somit vermischen.

Die Anpassung der Misch-/Reaktionskapazität an die Durchflussmengen erfolgt nicht nur durch die Länge der Verteilerarme 1c und 1d auf der Verteilerplatte (Ebene 1), sondern auch durch die Anzahl der Wiederholungen der Folien der Ebenen 8a und 8b, die jeweils eine ringförmige Misch-/Reaktionskammer 9 aufweisen.

Andere Mischungsverhältnisse als 50:50 an Edukt A und B werden z. B. dadurch erreicht, dass eine entsprechende Anzahl an Folien der Ebene 8a und/oder 8b keine Zuführkanäle 10a bis 10b' haben. Eine andere Form der Anpassung an unterschiedliche Mischungsverhältnisse wird in vorteilhafter Weise auch dadurch erreicht, dass eine unterschiedliche Anzahl von Folien der Ebenen 8a und 8b gestapelt werden.

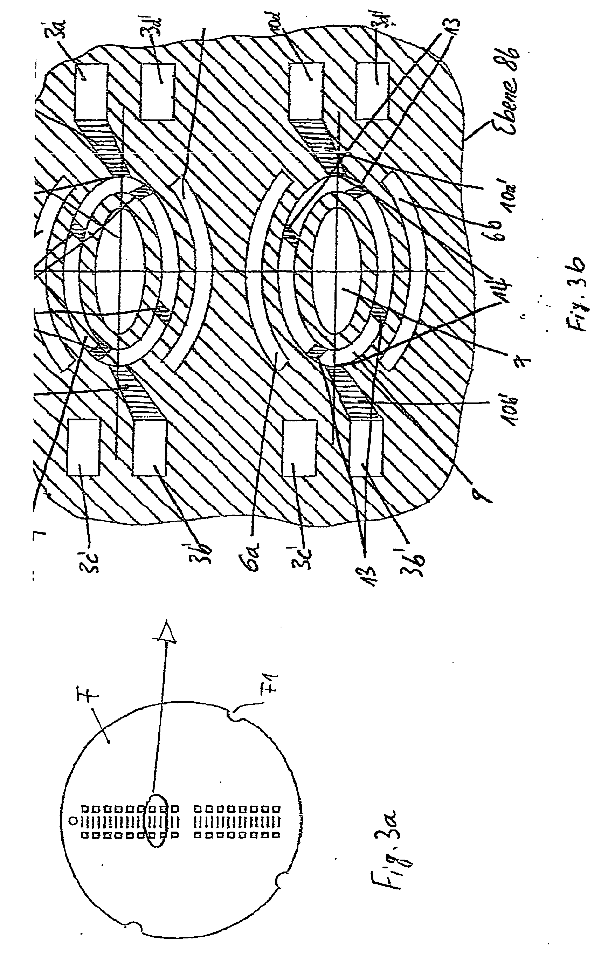

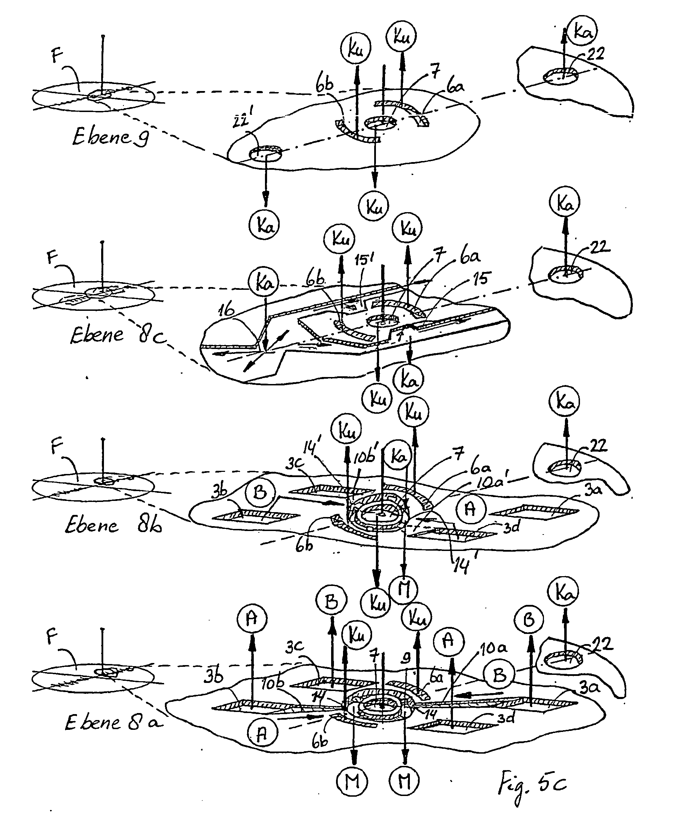

Eine Folie F nach Fig. 2a und 2b entspricht der Ebene 8a in Fig. 5c, während die entsprechende Darstellung in Fig. 3a und 3b der Ebene 8b entspricht. Die ringförmigen Misch-/Reaktionskammern 9 sind bei diesem Ausführungsbeispiel oval um einen mittigen Hohlzylinder 7 mit ovalem Querschnitt ausgebildet, durch den ein Temperierfluid fließt. Die Wandstärke 7a dieses Temperierzylinders 7 ist vorzugsweise kleiner als 1 mm, beispielsweise 50 bis 100 µ, bevorzugt 300 µ. Auf dem Außenumfang sind die Ringkammern 9 auf den langen Seiten von einem langgestreckten Rückführungskanal 6a und 6b umgeben, durch den ebenfalls Fluid zur Temperierung der Misch-/Reaktionskammer 9 strömt. Entsprechend ist die Wandstärke zwischen diesen flachen, gekrümmten Kanälen 6a, 6b und den Reaktionskammern 9 dünn ausgebildet, vorzugsweise kleiner 1 mm, beispielsweise 50 bis 100 µ, bevorzugt 300 µ..

In Fig. 2b und 3b ist zu erkennen, dass die Edukte A und B an vier verschiedenen Positionen **14**, 14' in die Misch-/Reaktionskanunem 9 fließen. In einer alternativen, hier nicht gezeigten Ausführungsform, kann die Fluidverteilungsplatte (Ebene 1) derart strukturiert werden, dass durch die Durchbrüche 3a, 3b, 3c und 3d jeweils unterschiedliche Edukte fließen. In diesem Fall werden die Verteilkanäle 4a, 4b (Ebene 3) nicht benötigt. In dieser Ausgestaltungsform ist die gleichzeitige Mischung von bis zu vier Edukten möglich.

Durch die Schraffur der Kanäle 10a und 10b sowie 10a' und 10b' in Fig. 2b und 3b ist ein zur Zeichenebene schräger Verlauf des Kanals angedeutet.

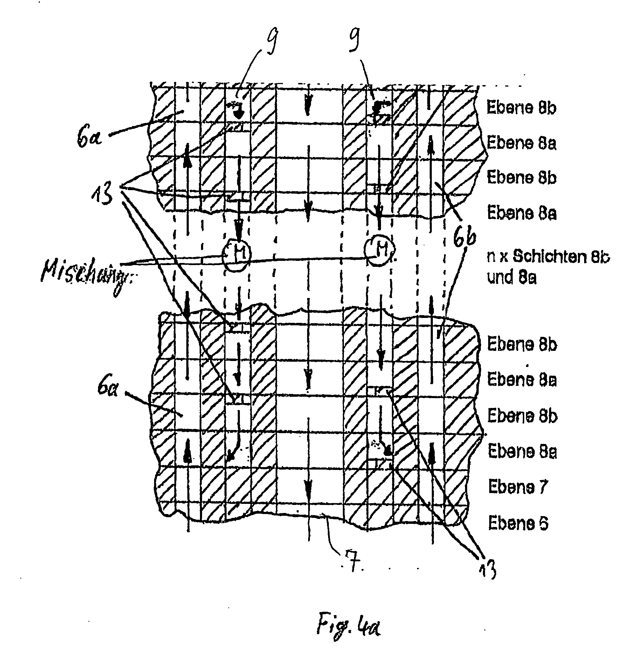

Wie Fig. 4a zeigt, werden die ringförmigen Reaktionskammern 9 oben durch eine Folie der Ebene 9 und unten durch eine Folie der Ebene 7 fluiddicht in Achsrichtung abgeschlossen, wobei Öffnungen zum Abfließen der Mischung verbleiben.

Die Mischung fließt in den Misch-/Reaktionskammern 9 abwärts, um auf der Ebene 7 (Fig. 5b) durch Auslässe 19 in Form von mikrostrukturierten Aussparungen in den Sammelkanälen 8a und 8b auszuströmen. Die Auslässe 19 können alternativ auch in Form eines einzelnen ringförmigen Auslasses gestaltet sein. Gleichzeitig dichtet die Folie der Ebene 7 die Misch-/Reaktionskammern 9 fluiddicht nach unten ab. Über die Sammelkanäle 8a und 8b gelangt die Mischung schließlich zur Abflussöffnung 20 auf den Ebenen 1 und 0.

Die Temperaturmessung kann in unmittelbarer Nähe der Misch-/Reaktionskammern 9 durch Temperatursensoren 21 (Fig. 1) erfolgen. Dabei können sowohl die Temperatur der zugeführten Edukte A und B als auch die Temperatur der Mischung ermittelt werden. Bei dem Ausführungsbeispiel nach Fig. 1 sind die Temperatursensoren 21 in Durchbrechungen des Gehäuseteils 1 a im Bereich der Kanäle 18a und 18b sowie im Bereich des durch die Aussparung 19 gebildeten Auslasses angeordnet.

Die Temperatur der Mischungsreaktion kann direkt z. B. durch ein Temperierfluid Ku kontrolliert werden. Das Temperierfluid Ku wird durch einen Zuführkanal 11 auf der Ebene 10 den Temperierzylindern 7 von oben auf der Ebene 9 zugeführt. Das Temperiermedium fließt im Innern der Temperierzylinder 7 abwärts und kühlt bzw. heizt auf diese Weise die innere Oberfläche der Misch-/Reaktionskammern 9, die in Form eines Kreisringes gestaltet sind. Da die Wandstärken zwischen 50 µm und 1 mm dick sind, ergibt sich eine sehr effektive Wärmeübertragung auf die Mischung bzw. Wärmeabfuhr von der Mischung, wodurch auch bei stark exothermen oder endothermen Mischreaktionen isotherme Prozessbedingungen erhalten werden.

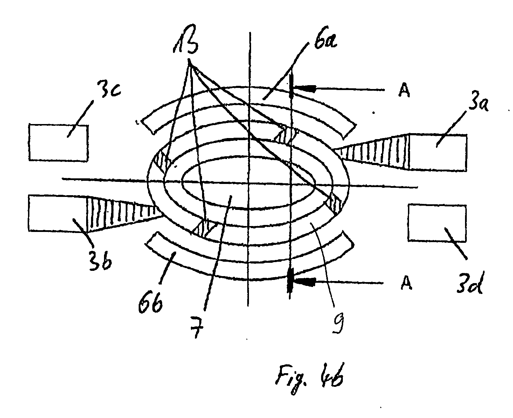

Die Temperierzylinder 7 werden gehalten durch mikrostrukturierte Brücken 13 in den Misch-/Reaktionskammern 9. Diese Mikrostrukturen 13 dienen zugleich der zusätzlichen Verwirbelung der Edukte A und B und damit einer schnelleren Vermischung. Vorteilhaft werden die Positionen der Mikrostrukturen 13 so gewählt, dass sie bei einer Drehung der Folien der Ebenen 8b nicht direkt übereinander liegen. Damit wird auf einfache Weise erreicht, dass die Edukte A und B zwischen den Mikrostrukturen 13 der verschiedenen Ebenen hindurch fließen können. Wie Fig. 4a zeigt, haben die Brücken 13 eine geringere Dicke als die betreffende Folie, an der sie ausgebildet bzw. angeformt sind, so dass sich eine Brücke 13 nicht über die gesamte Dicke der Folie erstreckt. Fig. 4b zeigt bei I-I die Schnittlinie der Schnittdarstellung in Fig. 4a.

Um die Edukte A und B bereits vor den Misch-/Reaktionskammern 9 vorheizen zu können, können alternativ jeweils zwischen den Folien der Ebenen 8a und 8b Folien eingefügt werden, die Heizeinrichtungen tragen, z. B. in Form von strukturierten Kanälen, durch die ein Heizfluid fließt.

In einer alternativen Ausführungsform werden sowohl die Mikrostrukturen 13 als auch die Wände der Misch-/Reaktionskammern 9 mit einem Katalysator beschichtet. Zudem ist eine Alternative vorgesehen, nach der die Folien der Ebenen 8a und 8b vollständig aus einem katalytischen Material gefertigt sind.

Das Temperierfluid Ku fließt auf der Ebene 5 in eine Auffangwanne 5. Anschließend wird es durch die Rückführungen 6a und 6b wieder nach oben gepresst, diesmal außen entlang der Misch-/Reaktionskammern 9. Damit werden nunmehr in vorteilhafter Weise auch die äußeren Oberflächen der Misch-/Reaktionskammern 9 temperiert. Auch hier ist die Wandstärke zwischen Rückführungen 6a und 6b sowie Misch-/Reaktionskammern 9 zwischen 50 µm und 1 mm dick, so dass wiederum eine sehr gute Wärmeübertragung erreicht wird. Gleichzeitig dienen die Rückführungen 6a und 6b zur thermischen Isolierung der Kammern 9. Das Temperierfluid Ku wird schließlich abgeführt durch den Abfuhrkanäl 12 auf der Ebene 10.

Alternativ kann in den zentralen Temperierzylinder 7 und/oder den Rückführungen 6a und 6b z. B. eine elektrische Heizvorrichtung z. B. in einfachster Form durch elektrisch isolierte Heizwiderstandsdrähte oder Heizwiderstandsfolien eingebaut werden.

In einer, hier nicht gezeigten, alternativen Ausführungsform wird die Mischung durch die Abflussöffnung 20 nicht abgeführt, sondern zur Verbesserung des Mischergebnisses oder zur Zumischung weiterer Edukte oder zur Verlängerung der Verweilzeit weiteren Misch-/Reaktionskammern 9 zugeführt, die sich parallel zu der Reihe der ersten Misch-/Reaktionskammem 9 angeordnet sind. Aufgrund der geringen geometrischen Ausdehnung der Misch-/Reaktionskammern 9 kann diese aufeinander folgende Zuführung auf engstem Raum erfolgen.

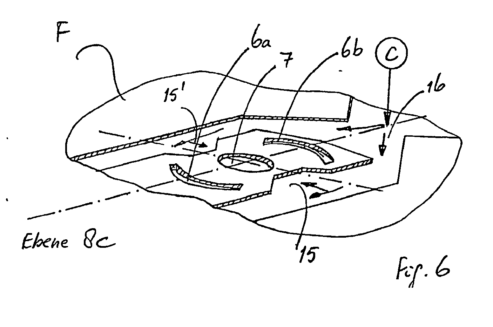

In einer weiteren vorteilhaften Ausführungsform werden den Misch-/Reaktionskammern 9 ein einen Katalysator tragendes Fluid Ka oder ein eine Mischung stabilisierender Hilfsstoff zugeführt. Das Fluid Ka wird über die Verteilerstruktur 16 der Ebene 8c (Fig. 6) zugeführt.

Von dort fließt es über Durchbrüche 15 und 15' z. B. von oben in die Misch-/Reaktionskammern 7, sofern sich die Misch-/Reaktionskammeröffnung 19 unterhalb der Misch-/Reaktionskammern 9 befinden. Ansonsten erfolgt die Zuführung von unten. Auf diese Weise wird erreicht, dass z. B. der Katalysator eine möglichst große Verweilzeit in den Misch-/Reaktionskammern 9 hat und mit allen Teilfluidströmen effektiv in Kontakt kommt.

Alternativ handelt es sich bei dem Fluid Ka, das über die Durchbrüche 15 und 15' zugeführt wird z. B. um einen inerten Stoff, der in angepassten Mengen zugeführt wird, so dass er als treibendes Medium die Mischung beschleunigt aus den Misch-/Reaktionskammem 9 drückt und dadurch eine erheblich reduzierte Verweilzeit für die Mischung bringt. Auf diese Weise können Verweilzeiten von weniger als eine Mikrosekunde erreicht werden, was besonders vorteilhaft bei extrem schnellen Mischreaktionen ist. Hierdurch wird eine Verstopfung der Vorrichtung verhindert.

Fig. 5b zeigt in Ebene 7 die Struktur des Ablaufkanals 20 der Mischung, wobei an zwei seitlich etwa tangential zu den ringförmigen Kammern 9 verlaufenden Kanälen 8a und 8b Durchbrüche bzw. Aussparungen 19 zwischen den Flachkanälen 6a und 6b ausgebildet sind, die mit der bei diesem Ausführungsbeispiel in der Ebene 8a darüber liegenden Reaktionskammern 9 in Verbindung stehen. Wie Fig. 5b zeigt, tritt die in der Reaktionskammer 9 erzeugte Mischung M nach unten durch die Aussparungen 19 in der Ebene 7 aus und gelangt zur Auslassöffnung 20. Die Folie bzw. Ebene 7 schließt zwar die ringförmigen Reaktionskammern 9 der Ebenen 8 axial nach unten fluiddicht ab, bildet aber zugleich durch die Aussparungen 19 Ablauföffnungen. Bei einer abgewandelten Ausführungsform können solche Ablauföffnungen 19 auch an der die Reaktionskammer 9 oben abdeckenden Folie bzw. Ebene vorgesehen werden, je nach Art des Betriebs der Vorrichtung.

Die beschriebene Mikrostruktur zum Mischen von wenigstens zwei Fluiden kann sehr geringe Abmessungen aufweisen. Die Dicke der Platten bzw. Folien F kann zwischen 50 und 500 µ liegen. Die Wandstärke zwischen den Flachkanälen 6a, 6b und der Reaktionskammer 9 und die Wandstärke 7a des Temperierzylinders 7 kann bevorzugt zwischen 50 und 500 µ, insbesondere zwischen 100 und 300 µ liegen. Der Temperierzylinder 7 kann in wenigstens einer horizontalen Richtung einen Durchmesser von weniger als 1 mm haben. Entsprechend kann der Durchmesser der ringförmigen Reaktionskammer 9 zumindest in einer horizontalen Richtung weniger als 2 mm betragen. Dagegen kann die Höhe der Reaktionskammer 9 je nach Bedarf ausgelegt werden und beispielsweise eine Abmessung zwischen 1 mm und 20 mm haben.

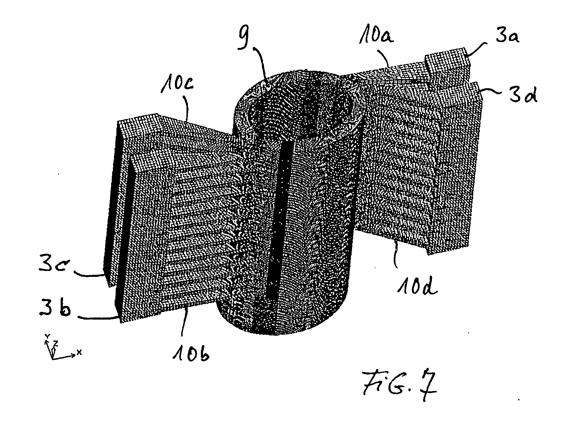

Fig. 7 zeigt in einer perspektivischen Ansicht die Fluidströme, wobei zur Verdeutlichung des Strömungsverlaufs die umgebenden Folienstrukturen weggelassen sind. Die in einem Abstand von der in dieser Darstellung hohlzylindrischen Mischkammer 9 angeordneten Blöcke 3a bis 3d stellen die in den einzelnen Folienlagen ausgebildeten Durchbrüche dar, von denen aus im Wesentlichen in der Ebene der einzelnen Folien Zuführkanäle 10a bis 10d radial in die hohlzylindrische Mischkammer 9 führen. Die von den vertikalen Kanälen 3a und 3b horizontal abzweigenden Zuführkanäle 10a und 10b liegen in etwa in zwei parallel zueinander liegenden Ebenen, die den Hohlzylinder der Mischkammer 9 schneiden, während die von den vertikalen Kanälen 3c und 3d horizontal abzweigenden Zuführkanäle 10c und 10d schräg zu den Zuführkanälen 10a und 10d verlaufen, sodass sich die durch die benachbarten Zuführkanäle 10a, 10d und 10c, 10b einströmenden Fluide unmittelbar beim Eintritt in die Mischkammer 9 kreuzen und durchmischen. Auch die Zuführkanäle 10c und 10d liegen in parallel zueinander liegenden vertikalen Ebenen, die aber die vertikalen Ebenen der Zuführkanäle 10a und 10b schneiden.

Wie in Fig. 7 erkennbar, sind die Zuführkanäle 10c und 10d in Achsrichtung geneigt gegenüber den horizontal verlaufenden Zuführkanälen 10a und 10b, um die aus den Mündungsöffnungen der Zuführkanäle in die Mischkammer austretenden Fluidströme aufeinander zu auszurichten, sodass sie sich nicht nur in der horizontalen Ebene kreuzen, sondern auch in der vertikalen Richtung entlang der Achse der Mischkammer 9.

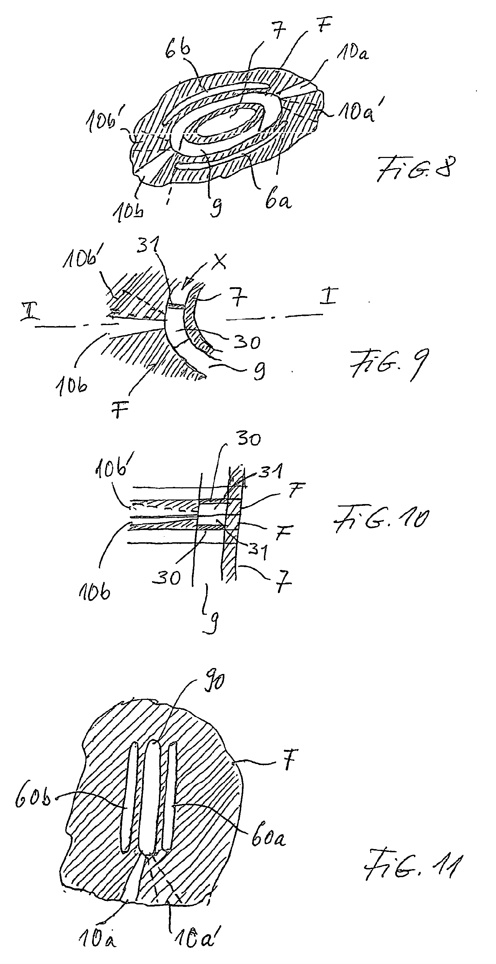

Fig. 8 zeigt schematisch in einer perspektivischen Ansicht den Grundaufbau des Mischbereichs mit dem rohrförmigen Temperierzylinder 7 in der Mischkammer 9, in die schräg zueinander verlaufende Zuführkanäle 10a, 10b und 10a', 10b' auf den einzelnen Folienebenen münden, wobei in dem Bereich des Umfangs der Mischkammer 9, der zwischen den Zuführkanälen 10a bis 10b' frei bleibt, Kanäle 6a, 6b für ein Kühl- oder Heizmedium ausgebildet sind, das die Mischkammer 9 auf dem Außenumfang in Richtung der Achse des Aufbaus umströmt. Dadurch, dass der Querschnitt der Mischkammer 9 oval ausgelegt ist und die Zuführkanäle 10a bis 10b' im Bereich der gegenüberliegenden Schmalseiten mit stärkerer Krümmung münden, verbleibt auf den Längsseiten mit flacherer Krümmung ein größerer Bereich für die Wärmezufuhr bzw. -abfuhr durch das die äußeren Kanäle 6a, 6b durchströmende Medium gegenüber einer kreisförmigen Querschnittsform der Mischkammer 9.

Zudem können im Bereich der stärkeren Krümmung der Mischkammer 9 die Zuführkanäle 10a und 10b bzw. 10a' und 10b' verstärkt gegeneinander gerichtet werden, sodass unmittelbar beim Eintritt in die Mischkammer die Fluidströme sich kreuzen und durchmischt werden.

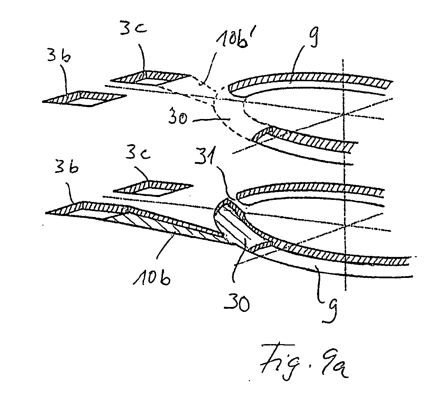

Fig. 9 zeigt eine Draufsicht auf die ringförmige Mischkammer 9 im Bereich der Mündung zweier Zuführkanäle 10b und 10b', die in aneinandergrenzenden Folien ausgebildet sind und schräg zueinander verlaufen. Da in Achsrichtung der Mischkammer die Mischbereiche jeweils zweier Kanäle unmittelbar übereinander liegen, wie Fig. 7 zeigt, kann es zweckmäßig sein, die einzelnen Mischbereiche durch ein Trennelement 30 voneinander zu trennen, damit die an den einzelnen Folienlagen einströmenden Fluide die Vermischung zweier Teilströme nicht behindern und eine unkontrollierte Strömung in Achsrichtung der Mischkammer 9 verhindert wird. Vorzugsweise erstreckt sich das Trennelement 30 plattenförmig in Umfangsrichtung der Mischkammer 9 nur im Mündungsbereich zweier Zuführkanäle 10a, 10a' und 10b, 10b', wie dies die Draufsicht in Fig. 9 zeigt. Fig. 10 zeigt die übereinanderliegenden Trennelemente 30 in einer schematischen Schnittansicht längs der Linie I-I in Fig. 9, wobei jeweils ein Trennelement 30 zwei Folienlagen mit den darin ausgebildeten Zuführkanälen zugeordnet ist.

Die Trennelemente 30 können an den Folien F unmittelbar ausgebildet bzw. angeformt sein, wie dies Fig. 9a in einer perspektivischen Ansicht zeigt.

Je nach Durchmesser der Mischkammer 9 und Strömungsgeschwindigkeit der diametral gegenüberliegend zugeführten Fluide kann es zweckmäßig sein, den Mischbereich zweier Zuführkanäle nicht nur in Achsrichtung durch das Trennelement 30 vom nächsten Mischbereich zu trennen, sondern auch gegen eine Strömung in Umfangsrichtung der Mischkammer 9 abzuschirmen, damit der Mischvorgang der sich kreuzenden Fluidströme unmittelbar nach dem Austritt aus den Zuführkanälen nicht durch die Gesamtströmung in Umfangsrichtung in der Mischkammer 9 beeinträchtigt wird, wenn beispielsweise durch eine hohe Zuströmgeschwindigkeit der schräg einmündenden Zuführkanäle 10a, 10a' eine ausgeprägte Strömung der gemischten Fluide in Umfangsrichtung der Mischkammer entstehen sollte. Zur Abschirmung des Mischbereichs in Umfangsrichtung der Mischkammer ist beim Ausführungsbeispiel nach den Fig. 9 und 10 an dem horizontalen Trennelement 30 eine in Achsrichtung sich erstreckende Abschirmblende 31 ausgebildet, durch die der Mischbereich gegen eine Strömung in Umfangsrichtung abgeschirmt wird, die in Fig. 9 durch den Pfeil X angedeutet ist Durch den schräg einmündenden Zuführkanal 10b' wird bei der Ausführungsform nach Fig. 9 eine Strömung im Gegenuhrzeigersinn in der Mischkammer 9 begünstigt.

Die Abschirmblende 31 kann sich, wie Fig. 9a und 10 zeigen, zwischen benachbarten Trennelementen 30 erstrecken, sodass sich durch die aufeinanderfolgenden Abschirmblenden 31 eine Trennwand in der Mischkammer 9 in Achsrichtung ergibt. Es ist aber auch möglich, die Abschirmblende nur über einen Teilbereich des Abstandes zwischen übereinanderliegenden Trennelementen 30 auszubilden.

Bei dem dargestellten Ausführungsbeispiel in Fig. 9, 9a und 10 ist die Abschirmblende an dem Trennelement 30 angeformt, sodass sich insgesamt ein L-förmiger Querschnitt des Aufbaus ergibt. Es ist aber auch möglich, die Abschirmblende 31 in einem Abstand vor dem Trennelement 30 zwischen Außen- und Innenumfang der Mischkammer 9 anzuordnen, sodass zwischen Trennelement 30 und Abschirmblende 31 ein Freiraum in Achsrichtung der Mischkammer 9 verbleibt.

Fig. 11 zeigt in einer Draufsicht eine vereinfachte Ausführungsform von Durchbrüchen in einer Folie F zur Ausbildung einer im Querschnitt langgestreckten Mischkammer 90, auf deren beiden Seiten im Querschnitt langgestreckte Kanäle 60a und 60b für ein Kühl- bzw. Heizmedium ausgebildet sind. Auf der Schmalseite der langgestreckten Mischkammer 90 münden schräg zueinander Zuführkanäle 10a, 10d. Auch bei dieser Ausführungsform erfolgt die Vermischung der beiden Teilströme aus den Zuführkanälen 10a und 10d unmittelbar beim Eintritt in die Mischkammer 90, wobei über die Temperierkanäle 60a und 60b eine entsprechende Temperatursteuerung des Mischvorgangs erfolgen kann.

Die Mischkammer 90 hat eine langgestreckte Form, damit ausreichend Platz vorhanden ist für das gesamte Volumen der einzelnen Teilströme, die auf den verschiedenen Folienebenen zugeführt werden. Je nach Art des Mengenzustroms in die Mischkammer kann diese auch eine andere als die dargestellte Querschnittsform haben. Beispielsweise kann die Mischkammer 90 in der Ansicht der Fig. 11 gekrümmt ausgebildet sein.

Bei einer Ausgestaltung nach Fig. 11 ist es auch möglich, die Mischkammer 90 von oben nach unten in Achsrichtung sich erweiternd auszugestalten, wenn die Gesamtmischung am Boden des Folienstapels abgeführt wird, wobei auch bei dieser Ausführungsform die Austrittsöffnung im Wesentlichen der Querschnittsform der untersten Mischkammer 90 entspricht. Mit anderen Worten kann bei einer solchen Ausgestaltung die oberste Mischkammer 90 eine geringere Länge haben als die unterste Mischkammer, sodass sich von oben nach unten ein sich vergrößernder Querschnitt ergibt, entsprechend der Menge der von Etage zu Etage zusätzlich zugeführten Fluidströme.

Wie aus einem Vergleich der Fig. 11 und 8 ersichtlich ist, kann bei einer in etwa zylindrischen bzw. ringförmigen Gestaltung der Mischkammer 9 ein insgesamt kompakterer und effektiverer Aufbau erzielt werden als bei der Bauform nach Fig. 11, wobei durch Auftreffen der Teilströme auf der Wand der Temperiereinrichtung bzw. des Temperierzylinders 7 einerseits die Durchmischung gefördert und andererseits die Temperatursteuerung verbessert wird.

Bei der Bauform nach Fig. 11 können die beiden Temperierkanäle 60a und 60b an dem dem Mischbereich gegenüberliegenden Ende der Mischkammer 90 auch miteinander verbunden sein, sodass sie die Mischkammer 90 auch in deren Endbereich umschließen.

Nach einer abgewandelten Ausführungsform können sich die Zuführkanäle 10a und 10b unmittelbar vor der Mündungsöffnung in die Mischkammer so überlappen und kreuzen, dass die Fluidteilströme in den beiden Zuführkanälen kurz vor Eintritt in die Mischkammer bereits in Kontakt miteinander kommen und sich durchmischen können, wobei der Mischvorgang bei Eintritt in die Mischkammer fortgesetzt wird. Mit anderen Worten wird bei einer solchen Ausgestaltung eine Trennwand zwischen den benachbarten Zuführkanälen kurz vor dem Mündungsbereich weggelassen.

## Patentansprüche

1. Verfahren zum Mischen von wenigstens zwei Fluiden in einem Mikromischreaktor, der aus einem Stapel von Folien (F) oder dünnen Platten aufgebaut ist,
wobei sich quer zu den Folienebenen eine Mischkammer (9,90) erstreckt und die zu mischenden Fluide getrennt und benachbart auf den Folienebenen quer zur Längsachse der Mischkammer eingeleitet werden, und
wobei die sich bildende Mischung auf wenigstens einem Abschnitt des Umfangs der Mischkammer (9,90) durch eine Temperiereinrichtung (6,60) temperiert wird,
**dadurch gekennzeichnet,**
**dass** die Fluide durch Zuführkanäle (10), die in Richtung auf die Mündungsöffnung verjüngt ausgebildet und in Richtung auf den Mündungsbereich gegeneinander geneigt angeordnet sind, so in die Mischkammer (9,90) eingeleitet werden, dass sich die Fluidströme beim Eintritt in die Mischkammer gegenseitig durchkreuzen,
und die Mischung der Fluide im Wesentlichen unmittelbar bei deren Einleitung in die Mischkammer erfolgt.

2. Verfahren nach Anspruch 1, wobei den auf den Folienebenen zugeführten Fluiden in Teilmengen ein Katalysator oder ein die Mischung unterstützendes Hilfsfluid beigemischt wird und/oder die Fluide über einen Katalysator geleitet werden, der an den Innenwänden der Zuführkanäle (10) und/oder der Mischkammer (9,90) aufgebracht ist.

3. Mikromischreaktor zum Mischen von wenigstens zwei Fluiden, der aus einem Stapel von Folien (F) oder dünnen Platten aufgebaut ist,
wobei sich senkrecht zu den Folienebenen eine Mischkammer (9, 90) erstreckt,
in den Ebenen der Folien (F) Zuführkanäle (10) für die zu mischenden Fluide ausgebildet sind, deren Mündungsöffnungen in die Mischkammer neben- bzw. übereinander liegen, und
wobei die Mischkammer (9,90) auf wenigstens einem Abschnitt ihres Umfangs eine Temperiereinrichtung (6, 60) aufweist,
**dadurch gekennzeichnet,**
**dass** die Zuführkanäle (10) in Richtung auf die Mündungsöffnung verjüngt ausgebildet und in Richtung auf den Mündungsbereich gegeneinander geneigt angeordnet sind,
so dass die Fluidströme bei Eintritt in die Mischkammer (9,90) sich gegenseitig durchkreuzen.

4. Mikromischreaktor nach Anspruch 3, wobei die Mischkammer (90) eine langgestreckte Querschnittsform mit zwei Breitseiten und zwei Schmalseiten hat und die Zuführkanäle (10) im Bereich einer Schmalseite der Mischkammer in diese münden.

5. Mikromischreaktor nach Anspruch 4, wobei auf wenigstens einer Breitseite der Mischkammer (90) ein parallel zur Mischkammer verlaufender Temperierkanal (60) ausgebildet ist.

6. Mikromischreaktor nach einem der Ansprüche 3 bis 5, wobei die Zuführkanäle (10) für die zu mischenden Fluide in Achsrichtung der Mischkammer (9, 90) gegeneinander geneigt ausgebildet sind.

7. Mikromischreaktor nach einem der Ansprüche 3 und 6, wobei die Mischkammer (9) im Querschnitt etwa ringförmig ausgebildet ist und auf dem Innenumfang von der Temperiereinrichtung (7) begrenzt wird,
wobei auf etwa diametral gegenüberliegenden Seiten der Mischkammer Zuführkanäle (10) für die zu mischenden Fluide münden.

8. Mikromischreaktor nach Anspruch 7, wobei auf dem Außenumfang der Mischkammer (9) zwischen den Zuführkanälen (10) parallel zur Mischkammer verlaufende Temperierkanäle (6) ausgebildet sind.

9. Mikromischreaktor nach einem der Ansprüche 3 bis 8, wobei in Achsrichtung der Mischkammer (9) zwischen den übereinander liegenden Mündungen der Zuführkanäle (10) Trennelemente (30) vorgesehen sind, die sich im Mündungsbereich parallel zu den Folienebenen erstrecken.

10. Mikromischreaktor nach einem der Ansprüche 7 bis 9, wobei in Umfangsrichtung der Mischkammer (9) vor den einzelnen Mündungen der Zuführkanäle (10) eine Abschirmblende (31) angeordnet ist, die sich parallel zur Achse der Mischkammer (1) erstreckt.

11. Mikromischreaktor nach einem der Ansprüche 7 bis 10, wobei die rohrförmige Temperiereinrichtung (7) in der Mischkammer (9) durch Durchbrüche und Wandabschnitte der einzelnen übereinander gestapelten Platten oder Folien (F) ausgebildet ist und die Wandabschnitte der Temperiereinrichtung durch angeformte Brücken (13) gehalten werden.

## Claims

1. Method for mixing at least two fluids in a micromixing reactor constructed from a stack of films (F) or thin plates,
wherein a mixing chamber (9, 90) extends transverse to the film planes, and the fluids for mixing are introduced separately and adjacent one another on the film planes transverse to the longitudinal axis of the mixing chamber, and
wherein the mixture which forms is tempered on at least a portion of the circumference of the mixing chamber (9, 90) by a tempering means (6, 60),
**characterized in that**
the fluids are introduced into the mixing chamber (9, 90) through supply passages (10) formed tapered towards the mouth opening and arranged at an angle to one another towards the mouth portion, so that the fluid flows cross one another on entering the mixing chamber, and
the mixture of fluids substantially takes place directly on their introduction into the mixing chamber.

2. Method according to claim 1, wherein a catalyst or an auxiliary substance supporting the mixing is added in partial amounts to the fluids supplied on the film planes, and/or the fluids are guided over a catalyst provided on the inside walls of the supply passages (10) and/or of the mixing chamber (9, 90).

3. Micromixing reactor for mixing at least two fluids constructed from a stack of films (F) or thin plates,
wherein a mixing chamber (9, 90) extends vertical to the film planes,
supply passages (10) for the fluids to be mixed are formed in the planes of the films (F), the mouth openings of which supply passages (10) are provided in the mixing chamber adjacent or above one another, and
wherein the mixing chamber (9, 90) has a tempering means (6, 60) on at least one portion of its circumference
**characterized in that**
the supply passages (10) are arranged tapered towards the mouth opening at an angle to one another and arranged at an angle to one another towards the mouth portion, so that the fluid flows cross one another on entering the mixing chamber (9, 90).

4. Micromixing reactor according to claim 3, wherein the mixing chamber (90) has a long cross-sectional shape with two wide sides and two narrow sides and the supply passages (10) open into this in the area of a narrow side of the mixing chamber.

5. Micromixing reactor according to claim 4, wherein on at least one broad side of the mixing chamber (90) a tempering passage (60) is formed extending parallel to the mixing chamber.

6. Micromixing reactor according to one of claims 3 to 5, wherein the supply passages (10) for the fluids to be mixed are arranged in the axial direction of the mixing chamber (9, 90) at an angle to one another.

7. Micromixing reactor according to one of claims 3 and 6, wherein the mixing chamber (9) is formed approximately annular in cross section, and is delimited from the tempering means (7) on the inner circumference,
wherein on approximately diametrically opposite sides of the mixing chamber, supply passages (10) open for the fluids to be mixed.

8. Micromixing reactor according to claim 7, wherein on the outer circumference of the mixing chamber (9) between the supply passages (10), tempering passages (6) are formed extending parallel to the mixing chamber.

9. Micromixing reactor according to one of claims 3 to 8, wherein in the axial direction of the mixing chamber (9) between the overlapping mouths of the supply passages (10), partition elements (30) are provided, which extend in the mouth portion parallel to the film planes.

10. Micromixing reactor according to one of claims 7 to 9, wherein in the circumferential direction of the mixing chamber (9) before the individual mouths of the supply passages (10), a shield screen (31) is arranged, which extends parallel to the axis of the mixing chamber (9).

11. Micromixing reactor according to one of claims 7 to 10, wherein the tubular tempering cylinder (7) is formed in the mixing chamber (9) by holes and wall sections of the individual plates or films (F) stacked over one another, and the wall sections of the tempering cylinder are held by moulded-on bridges (13).

## Revendications

1. Procédé pour mélanger au moins deux fluides d'un microréacteur de mélange qui est constitué d'une pile de films (F) ou de plaques fines,
une chambre de mélange (9, 90) s'étendant à l'oblique des plans des films et les fluides à mélanger étant introduits, séparément et de manière limitrophe aux plans des films, à l'oblique de l'axe longitudinal de la chambre de mélange, et
le mélange se constituant étant équilibré sur au moins un tronçon du pourtour de la chambre de mélange (9, 90) grâce à un dispositif d'équilibrage (6, 60), **caractérisé en ce que**
le fluide est introduit dans la chambre de mélange (9, 90) par des canaux d'alimentation (10), qui sont conçus en se rétrécissant en direction de l'ouverture d'embouchure et qui sont disposés de manière inclinée les uns contre les autres en direction de la zone d'embouchure de façon à ce que les flux fluidiques se croisent réciproquement lors de leur entrée dans la chambre de mélange, et
que le mélange des fluides s'effectue essentiellement directement lors de leur introduction dans la chambre de mélange.

2. Procédé selon la revendication 1, selon laquelle un catalyseur ou un fluide auxiliaire assistant le mélange est mélangé en quantités partielles au fluide conduit sur les plans de films et/ou les fluides sont introduits par le biais d'un catalyseur, qui est monté contre les parois intérieures des canaux d'alimentation (10) et/ou de la chambre de mélange (9, 90).

3. Microréacteur de mélange pour mélanger au moins deux fluides, qui est constitué d'une pile de films (F) ou de plaques fines,
une chambre de mélange (9, 90) s'étendant perpendiculairement aux plans des films, des canaux d'alimentation étant conçus dans les plans des films (F) pour les fluides à mélanger, dont les ouvertures d'embouchure se situent de manière juxtaposée ou superposée dans la chambre de mélange, et
la chambre de mélange (9, 90) présentant sur au moins un tronçon de son pourtour un dispositif d'équilibrage (6, 60),
**caractérisé en ce**
**que** les canaux d'alimentation (10) sont conçus en se rétrécissant en direction de l'ouverture d'embouchure et sont disposés de manière inclinée les uns contre les autres en direction de la zone d'embouchure, de telle sorte que les flux fluidiques se croisent réciproquement lors de l'entrée dans la chambre de mélange (9, 90).

4. Microréacteur de mélange selon la revendication 3, selon laquelle la chambre de mélange (90) a une forme de section transversale étirée en longueur avec deux côtés larges et deux côtés étroits et que les canaux d'alimentation (10) débouchent, dans la zone d'un côté étroit de la chambre de mélange, dans cette dernière.

5. Microréacteur de mélange selon la revendication 4, selon laquelle au moins d'un côté large de la chambre de mélange (90) est conçu un canal d'équilibrage (60) s'étendant parallèlement à la chambre de mélange.

6. Microréacteur de mélange selon l'une quelconque des revendications 3 à 5, selon laquelle les canaux d'alimentation (10) sont conçus de manière inclinée les uns contre les autres pour les fluides à mélanger en direction axiale de la chambre de mélange (9, 90).

7. Microréacteur de mélange selon l'une quelconque des revendications 3 et 6, selon laquelle la chambre de mélange (9) est conçue dans sa section transversale de manière à peu près circulaire et est délimitée sur le pourtour intérieur par le dispositif d'équilibrage (7),
des canaux d'alimentation (10) pour les fluides à mélanger débouchant sur des côtés opposés à peu près diamétralement de la chambre de mélange.

8. Microréacteur de mélange selon la revendication 7, selon laquelle sur le pourtour extérieur de la chambre de mélange (9) sont conçus des canaux d'équilibrage (6) s'étendant entre les canaux d'alimentation (10) parallèlement à la chambre de mélange.

9. Microréacteur de mélange selon l'une quelconque des revendications 3 à 8, selon laquelle en direction axiale de la chambre de mélange (9) sont prévus entre les embouchures des canaux d'alimentation (10) situés de manière superposée, des éléments de séparation (30), qui s'étendent dans la zone d'embouchure parallèlement aux plans des films.

10. Microréacteur de mélange selon l'une quelconque des revendications 7 à 9, selon laquelle en direction périphérique de la chambre de mélange (9) est disposé devant les différentes embouchures des canaux d'alimentation (10), un écran de blindage (31), qui s'étend parallèlement à l'axe de la chambre de mélange (1).

11. Microréacteur de mélange selon l'une quelconque des revendications 7 à 10, selon laquelle le dispositif d'équilibrage (7) en forme de tube est conçu dans la chambre de mélange (9) par des ruptures et des tronçons de paroi des différents plaques ou films (F) empilés les uns sur les autres et que les tronçons de paroi du dispositif d'équilibrage sont maintenus par des ponts moulés (13).
